# EUROPEAN PATENT APPLICATION

(11) **EP 3 960 525 A1**
(43) Date of publication of application: **02.03.2022**
(21) Application number: 20193710.9
(22) Date of filing: 31.08.2020
(51) Int. Cl.: B60L 53/14, B60L 53/16, B60L 53/302

(54) **COOLING SYSTEM FOR AN ELECTRIC VEHICLE**

(71) Applicant: Ningbo Geely Automobile Research & Development Co. Ltd., Hangzhou Bay New District Ningbo 315336 (CN); Zhejiang Geely Holding Group Co., Ltd., Zhejiang 310051 (CN)
(72) Inventor: KESTI, Jari, 414 82 Göteborg (SE); LÖWERED, Leon, 417 60 Göteborg (SE)
(74) Representative: Zacco Sweden AB

(57) **Abstract**

The disclosure relates to a method for increased cooling power of a vehicle component (4) and a cooling system (1) for an electric vehicle (11). The cooling system (1) comprises an on-board charger (3) in cooling fluid connection with a cooling fluid pump (5), a cooling system radiator (2) and a vehicle component (4). The on-board charger (3) comprises a heat exchanging arrangement (9) arranged on a housing (6) of the on-board charger (3). When an airflow generated from the vehicle (11) moving flows over the heat exchanging arrangement (9), the heat exchanging arrangement (9) is arranged to cool a cooling fluid pumped through the on-board charger (3) by means of heat exchange between the cooling fluid and the airflow, thereby increasing the cooling of the vehicle component (4).

## Description

### TECHNICAL FIELD

The disclosure relates to a cooling system for an electric vehicle. The cooling system comprises an on-board charger in cooling fluid connection with a cooling fluid pump, a cooling system radiator and a vehicle component. The disclosure also relates to a method for increased cooling power of a vehicle component.

### BACKGROUND ART

Electrified vehicles running on stored battery power must finely balance the amount of charge there is in the battery, how much power is used to propel the vehicle, how much is used for auxiliary systems and what is lost in pure energy loss. This balancing directly affect the electric vehicle's range. The energy consumption by the auxiliary systems ranges from about 200 to 800 W (normal to low use), depending on test cycle, conditions and vehicle.

Electric vehicles capable of being charged by an external power source uses an on-board charger to charge the battery from the external power source. The on-board charger is connected to a cooling circuit that cools the electric motor and the combined inverter DC/DC when driving and the on-board charger during charging. The cooling circuit is designed in such a way that cooling liquid flows through the components even during times when they do not need cooling.

US 6,094,927 discloses a cooling circuit where the batteries and other electrical components can be cooled by an electric fan. A fan, however, requires power to run and will thereby affect the range of the vehicle.

### SUMMARY

An objective of the disclosure is to provide a cooling system and a method for increased cooling power of a vehicle component. The objective is achieved by the cooling system of claim 1 and the method of claim 12. Dependent claims provide advantageous embodiments.

The disclosure relates to a cooling system for an electric vehicle. The cooling system comprises an on-board charger in cooling fluid connection with a cooling fluid pump, a cooling system radiator and a vehicle component. The on-board charger comprises a heat exchanging arrangement arranged on a housing of the on-board charger. When an airflow generated from the vehicle moving flows over the heat exchanging arrangement, the heat exchanging arrangement is arranged to cool a cooling fluid pumped through the on-board charger by means of heat exchange between the cooling fluid and the airflow.

One advantage with the cooling system according to the disclosure is that is increases the cooling of the vehicle component. The vehicle component is for instance an electric motor and/or a combined inverter and DC/DC converter.

In electric vehicles, a cooling system is arranged to cool down various vehicle components during drive as well as the on-board charger when standing still during charge. The cooling system is designed such that cooling fluid flows through said vehicle components even if one does not need cooling. The on-board charger is today regarded as a pure passive component during driving but cooling fluid is still pumped through it when the cooling fluid pump is engaged. The way the on-board charger is used today, leaving it passive during driving, adapting the on-board charger for exchanging heat between the cooling fluid that runs inside the on-board charger and ambient air flowing past the on-board charger due to the motion of the vehicle during driving improves the overall cooling effect in the cooling system.

The on-board charger may be arranged in connection to an air channel and the airflow is a ram airflow generated in the air channel from the vehicle moving, wherein the ram airflow is directed to flow over the heat exchanging arrangement via openings in the air channel, and/or wherein at least a part of the heat exchanging arrangement extends into the ram airflow in the air channel such that the ram air flow flows over the heat exchanging arrangement.

The on-board charger is normally located in a low temperature zone in the vehicle, close to an air channel. Modifying the on-board charger to be arranged in connection to an air channel, the on-board charger's material properties and the orientation of the internal cooling channels in the on-board charger makes ram airflow a suitable way to transport air with a cooler temperature than the cooling fluid inside the on-board charger. In this way, an efficient cooling can be achieved.

The heat exchanging arrangement may be arranged on a housing lid of the on-board charger.

By arranging the heat exchanging arrangement on a housing lid of the on-board charger, i.e. on a front side of the on-board charger, the heat exchanging arrangement will in an easy way, provide the on-board charger with a heat exchanging ability without having to change the on-board charger internally. Inside the on-board charger, superficial internal cooling ducts run making the distance between the outside of the housing and the internal cooling ducts small. By installing the heat exchanging arrangement on the housing lid, the heat exchanging arrangement can be easily replaced and no need of any changes to component of the on-board charger is required. Accessing the interior of the on-board charger is not affected.

The heat exchanging arrangement may comprise a cooling flange or cooling fins.

Different types of heat exchanging arrangements may be provided in order to make the on-board charger function as a heat exchanger. A cooling flange or cooling fins are two examples, but other alternatives are of course possible.

The on-board charger may be arranged essentially parallel to a grill of the vehicle and the air channel is an air channel arranged to create an air curtain over a front tire.

One alternative location for the on-board charger is to essentially keep in a position where it is located today. With minor modifications to the on-board chargers orientation and position, an existing air channel arranged to create an air curtain over a front tire can also be used to provide ram airflow over the on-board charger to provide cooling.

The on-board charger may be arranged adjacent a main radiator and the air channel is an air channel arranged to direct air over the main radiator.

A further alternative location for the on-board charger could be to place the on-board charger adjacent the vehicle's main radiator, i.e. the radiator that is used to provide cooling/heating for e.g. the vehicle's air conditioning. In this position, the air channel providing the ram airflow over the on-board charger is either the air channel arranged to direct air over the main radiator or a by-pass air channel directing air from the air channel arranged to direct air over the main radiator.

The on-board charger may be arranged under a lower engine under shield of the vehicle and the air channel is an air channel in the lower engine under shield.

A further alternative location for the on-board charger could be to place the on-board charger under a lower engine under shield of the vehicle and forming an air channel in the lower engine under shield to provide the ram airflow over the on-board charger.

The on-board charger may be arranged between the vehicle component and the cooling system radiator in the cooling system.

In order to further improve the cooling effect, the on-board charger could be placed between the vehicle component and the cooling system radiator in the cooling system. This would put the on-board charger before the cooling system radiator, thereby leading to the greatest total cooling effect of the cooling system.

The heat exchanging arrangement may be a passive heat exchanging arrangement.

In one alternative embodiment, the heat exchanging arrangement may be a passive heat exchanging arrangement meaning that the heat exchanging arrangement is not cooled by anything besides an airflow generated from the vehicle moving flows over the heat exchanging arrangement.

The heat exchanging arrangement may be an active heat exchanging arrangement, wherein the cooling flange or cooling fins is arranged to also be provided with a coolant medium.

As an alternative to a passive heat exchanging arrangement, the heat exchanging arrangement may be an active heat exchanging arrangement, meaning that additional cooling is provided to the heat exchanging arrangement on the housing lid of the on-board charger. A coolant medium with a temperature lower than the cooling fluid inside the on-board charger could be provided to the active heat exchanging arrangement, thereby leading to an increase in cooling effect. The coolant medium could be provided from for instance the air conditioning cooling system, the battery cooling system or another cooling system of the vehicle.

The disclosure also relates to a vehicle comprising a cooling system according to the above description.

The disclosure also relates to a method for increased cooling power of a vehicle component, wherein a cooling system comprises an on-board charger in cooling fluid connection with a cooling fluid pump, a cooling system radiator and the vehicle component, wherein the method comprises:
- providing the on-board charger with a heat exchanging arrangement arranged on a housing of the on-board charger,
- generating an airflow from the vehicle moving arranged to flow over the heat exchanging arrangement,
- cooling a cooling fluid passing through the on-board charger by means of heat exchange between the cooling fluid and the airflow flowing over the heat exchanging arrangement.

The method may also comprise:
- arranging the on-board charger in connection to an air channel,
- generating a ram airflow in the air channel from the vehicle moving,
- directing the ram airflow to flow over the heat exchanging arrangement via openings in the air channel, and/or
- arranging at least a part of the heat exchanging arrangement to extend into the ram airflow in the air channel such that the ram air flow flows over the heat exchanging arrangement.

The method may also comprise:
- arranging the heat exchanging arrangement on a housing lid of the on-board charger.

The method may also comprise:
- arranging a cooling flange or cooling fins as the heat exchanging arrangement.

The advantages with the method are the same as for the cooling system described above.

### BRIEF DESCRIPTION OF THE DRAWINGS

Figure 1 schematically shows cooling system according to a first embodiment of the disclosure,
Figure 2 schematically shows a cut-away view of an on-board charger,
Figure 3 schematically shows an on-board charger where a housing lid comprises a heat exchanging arrangement,
Figure 4a schematically shows a front view of a vehicle displaying an on-board charger of the cooling system in a first location,
Figure 4b schematically shows a side view of a vehicle displaying an on-board charger of the cooling system in a first location,
Figure 4c schematically shows a top view of a vehicle displaying an on-board charger of the cooling system in a first location,
Figure 5 schematically shows a front view of a vehicle displaying an on-board charger of the cooling system in a second location,
Figure 6 schematically shows a top view of a vehicle displaying an on-board charger of the cooling system in a third location,
Figure 7 schematically shows cooling system according to a second embodiment of the disclosure,
Figure 8 schematically shows a vehicle comprising a cooling system according to the disclosure.

### DETAILED DESCRIPTION

Within the context of the disclosure, an electric vehicle includes all kinds of electric vehicles that can be charged from an external power source, including plug-in electric vehicles and plug-in hybrid electric vehicles.

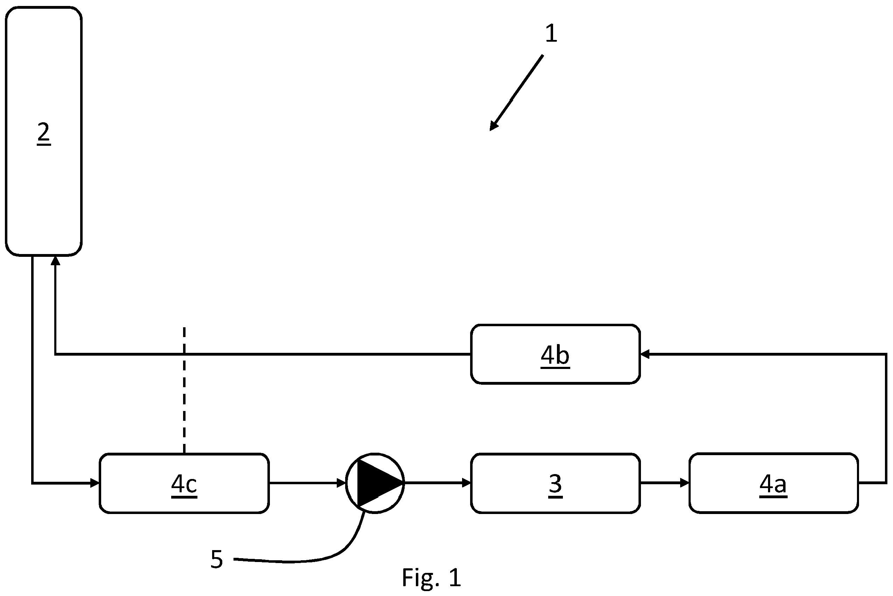

Figure 1 schematically shows a cooling system 1 according to a first embodiment of the disclosure. The cooling system 1 comprises a cooling system radiator 2 located behind a grill of a vehicle and in front of the vehicle's main radiators/condensers. The cooling system radiator 2 is thermodynamically connected to an on-board charger 3 and one or more vehicle components 4 such as a combined inverter and DC/DC converter 4a or an electric motor 4b. An internal flow of cooling liquid is pumped through each of the on-board charger 3 and the vehicle components 4 by a cooling fluid pump 5 to provide cooling. External airflow over the cooling system radiator 2 that cools the cooling liquid is driven by ram pressure and/or by a cool pack fan (not shown). The cooling system 1 may also comprise an expansion tank 4c.

The cooling system 1 provides cooling to the vehicle components 4 during driving and to the on-board charger 3 when the vehicle is standing still during charging. The cooling system 1 is designed so that cooling fluid will flow through the cooling system 1 even if one or more of the parts of the cooling system 1 do not need cooling. During driving of the electric vehicle, the on-board charger 3 can be regarded as purely passive even though cooling fluid is continuously pumped through it when the cooling fluid pump 5 is engaged.

The cooling system 1 has a maximum operating temperature of about 65-75 °C and by equipping the on-board charger 3 with a heat exchanging arrangement, the on-board charger 3 due to its usage, design and placement in the engine compartment can be utilized as an additional heat exchanger during driving. By making small changes to the on-board charger 3, it can be turned to a heat exchanger providing additional cooling power to cool one or more vehicle components 4 during driving. By doing so, the fan and pump usage during electric drive is lowered and some of the parasitic losses in the vehicle's systems can be cancelled.

To assist with the cooling, an airflow generated from the vehicle moving is arranged to flow over the heat exchanging arrangement.

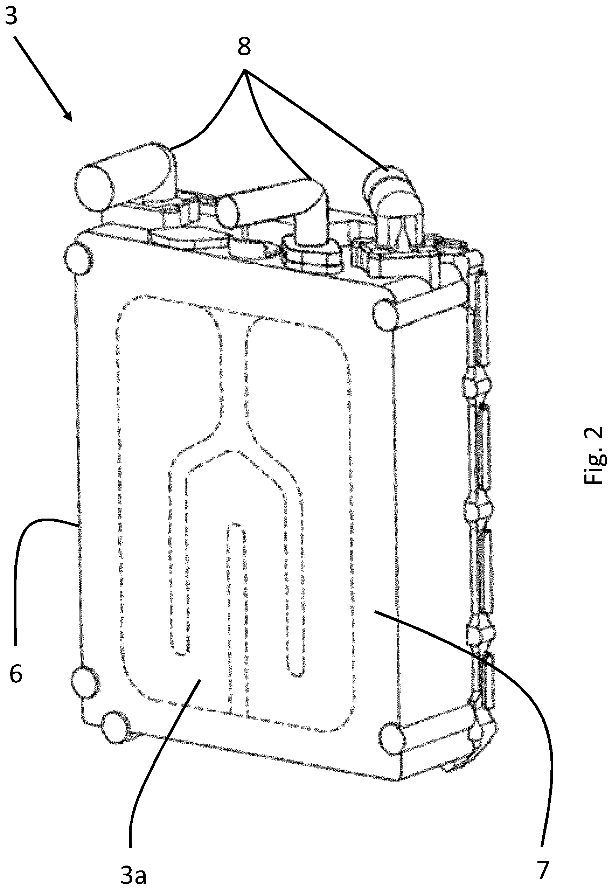

Figure 2 schematically shows a perspective view of an on-board charger 3 according to the disclosure. The on-board charger 3 shown is an on-board charger used today modified for the additional cooling. The on-board charger 3 comprises a housing 6, a housing lid 7 and various electrical and fluid connections 8. As can be seen from the figure, internal cooling ducts 3a run close to an outer surface of the housing 6.

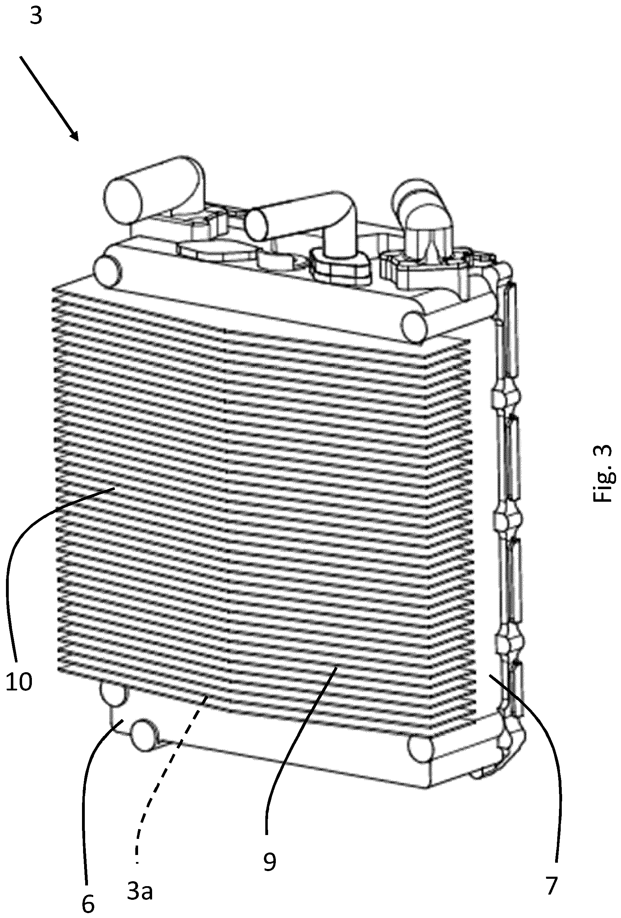

Figure 3 schematically shows an on-board charger 3 where the housing lid 7 has been equipped with a heat exchanging arrangement 9. In figure 3, the housing lid 7 on a front side 10 of the on-board charger 3 of figure 2 is now provided with a heat exchanging arrangement 9 such that the cooling liquid inside the internal cooling ducts 3a much more efficiently can exchange heat with the cooler ambient air. In figure 3, the heat exchanging arrangement 9 is exemplified by several cooling fins. Other alternatives could be various kinds of cooling flanges.

The heat exchanging arrangement 9 is in one alternative configuration a passive heat exchanging arrangement meaning that the heat exchanging arrangement 9 is not cooled by anything besides an airflow generated from the vehicle moving flows over the heat exchanging arrangement 9.

In a second alternative configuration (not shown), the heat exchanging arrangement 9 is an active heat exchanging arrangement, wherein the cooling flange or cooling fins is arranged to also be provided with a coolant medium, meaning that additional cooling can be provided to the heat exchanging arrangement on the housing lid of the on-board charger.

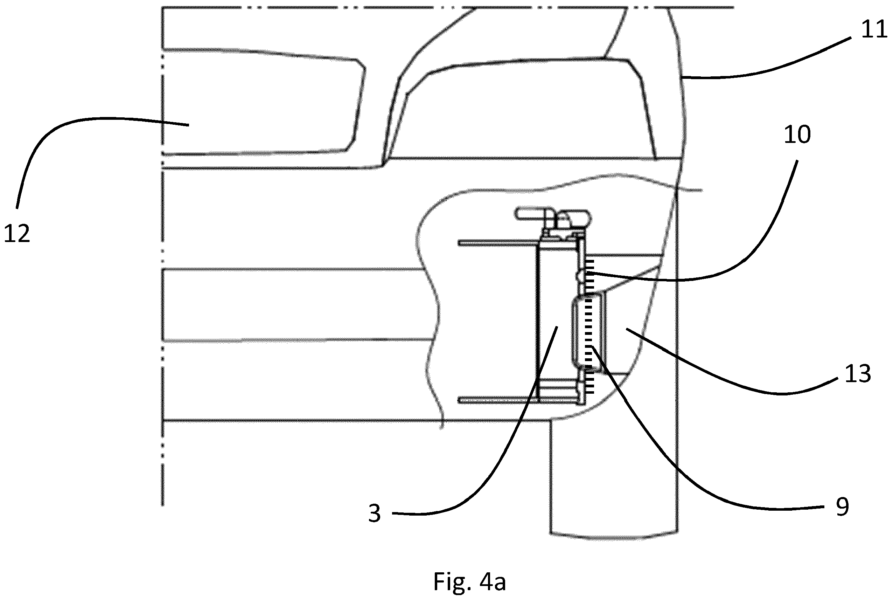

Figure 4a schematically shows a front view of a vehicle 11 displaying an on-board charger 3 of the cooling system 1 in a first location. As shown in the picture, the on-board charger 3 is placed in the lower right front part of the vehicle 11, parallel to a grill 12 of the vehicle 11, but separated from the airflow generated through the grill 12. It is also placed right next to an air channel 13 currently used to create an air curtain over a front tire for drag reduction. Normally, a front side 10 of the housing 6 of the on-board charger 3 is oriented forward, perpendicular to the direction of the vehicle ram flow, i.e. the front side 10 faces the direction of the vehicle ram flow. In this embodiment, the on-board charger 3 is oriented such that the front side 10 of the on-board charger 3 is placed parallel to the direction of the vehicle ram flow, i.e. the front side 10 faces the left of the vehicle 11. With this orientation, the front side 10 of the on-board charger 3 now faces the air channel 13 instead of facing forward. As can be seen from the figure, this allows the heat exchanging arrangement 9 to extend into the air channel 13.

Alternatively, airfrom the air channel 13 can be diverted over the heat exchanging arrangement 9 to provide cooling to the heat exchanging arrangement 9. In this case, the on-board charger 3 can be oriented with the front side 10 facing forward.

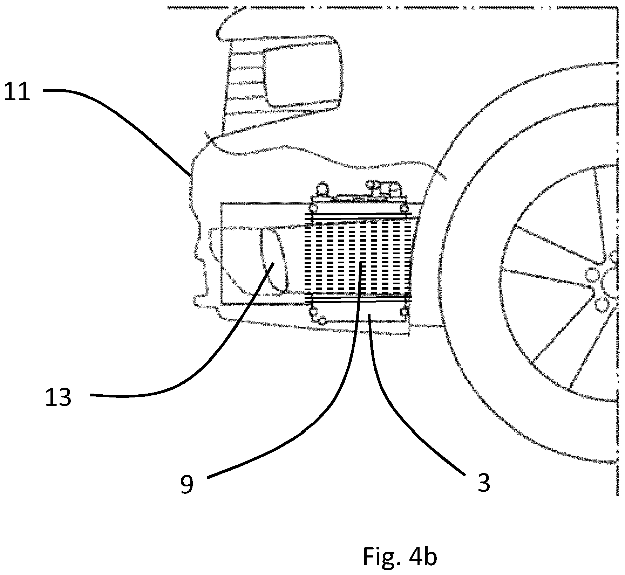

Figure 4b schematically shows a side view of a vehicle 11 displaying an on-board charger 3 of the cooling system 1 in a first location. In this figure, it can more clearly be seen how the heat exchanging arrangement 9 interacts with the air channel 13.

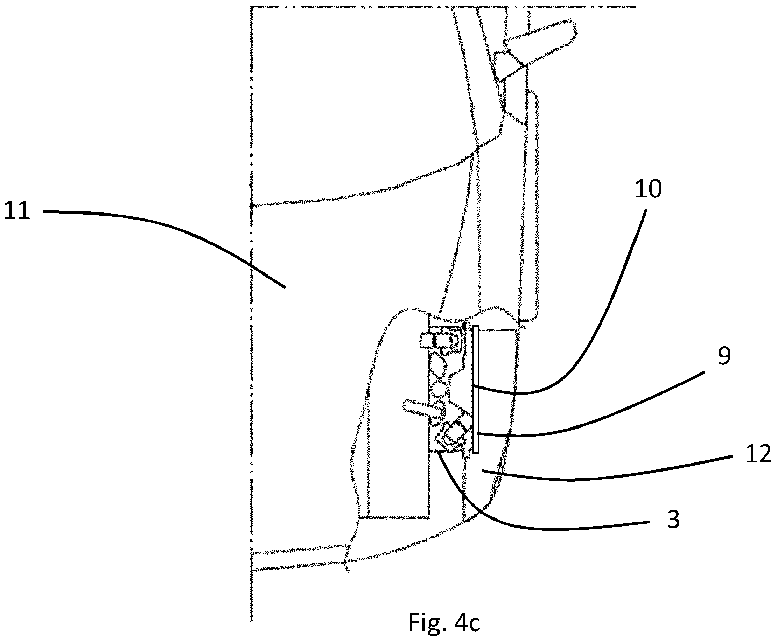

Figure 4c schematically shows a top view of a vehicle 11 displaying an on-board charger 3 of the cooling system 1 in a first location. In this figure, the orientation of the on-board charger 3 can clearly be seen.

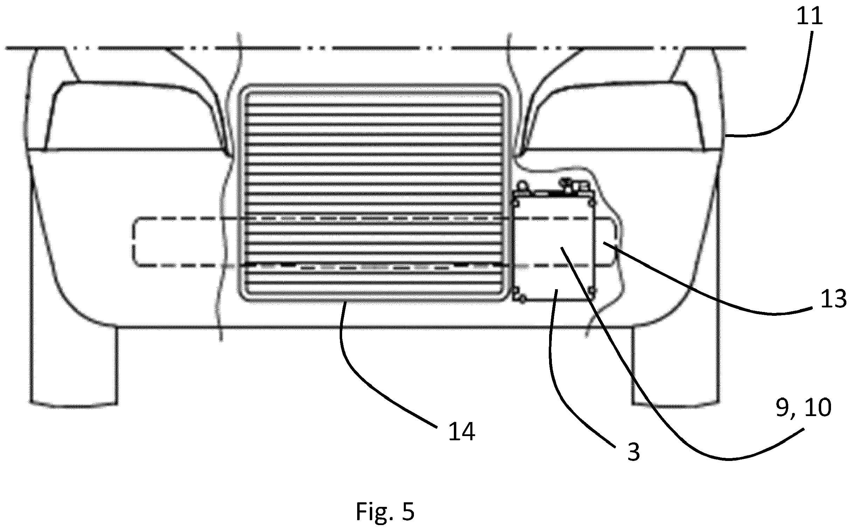

Figure 5 schematically shows a front view of a vehicle 11 displaying an on-board charger 3 of the cooling system 1 in a second location. In the second location, the on-board charger 3 is placed adjacent a main radiator 14, i.e. the radiator used for e.g. the air conditioning. An air channel 13 that uses the air that flows past the main radiator 14 is provided to direct air over the on-board charger 3. In the example of figure 5, the on-board charger 3 is facing forward, with the front side 10 perpendicular to the ram airflow direction. It is also possible in this second location to orient the on-board charger 3 such that the front side 10 is parallel to the ram airflow direction.

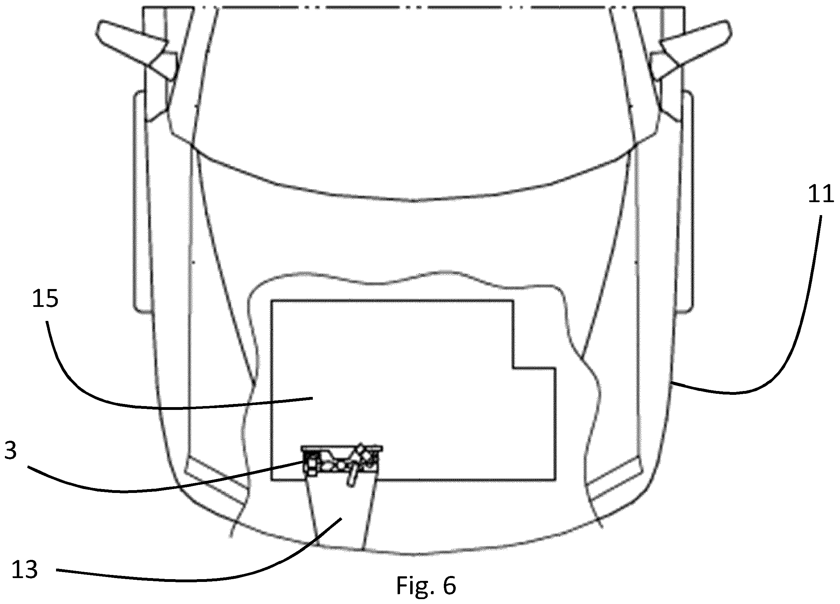

Figure 6 schematically shows a top view of a vehicle 11 displaying an on-board charger 3 of the cooling system 1 in a third location. In this location, the on-board charger 3 is located under a lower engine under shield 15, sometimes called lower engine splash shield. This means that the on-board charger 3 is placed between the engine and the lower engine under shield 15. One or more openings (not shown) in the lower engine under shield 15 can be directed into an air channel 13 that directs air past the on-board charger 3. Alternatively, the on-board charger 3 can be situated close to the openings such that no air channel 13 is required.

In all three positions described above, the airflow going over the on-board charger will not be directly affected by warm air from the main cooling system or from the engine compartment and will therefore be that of ambient temperature. The cooling fluid temperature in the on-board charger will for strained scenarios match that of the requirement for the combined inverter DC/DC converter or electric motor, i.e. 65-75 °C. A high temperature delta between the ambient air and the cooling fluid can therefore be expected.

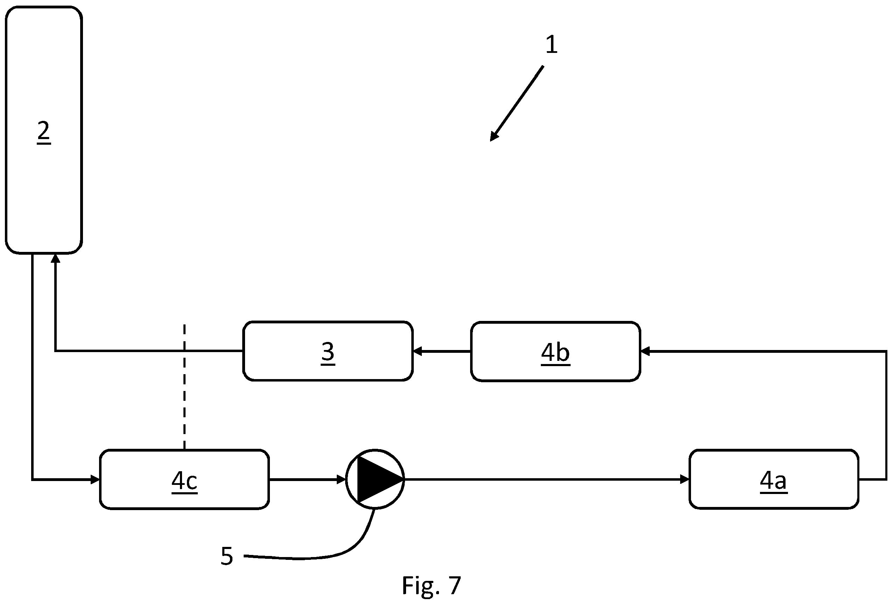

Figure 7 schematically shows a cooling system 1 according to a second embodiment of the disclosure. In this embodiment, the on-board charger 3 is placed between the cooling system radiator 2 and the vehicle components 4. In this way, the total cooling power of the cooling system 1 can be increased further.

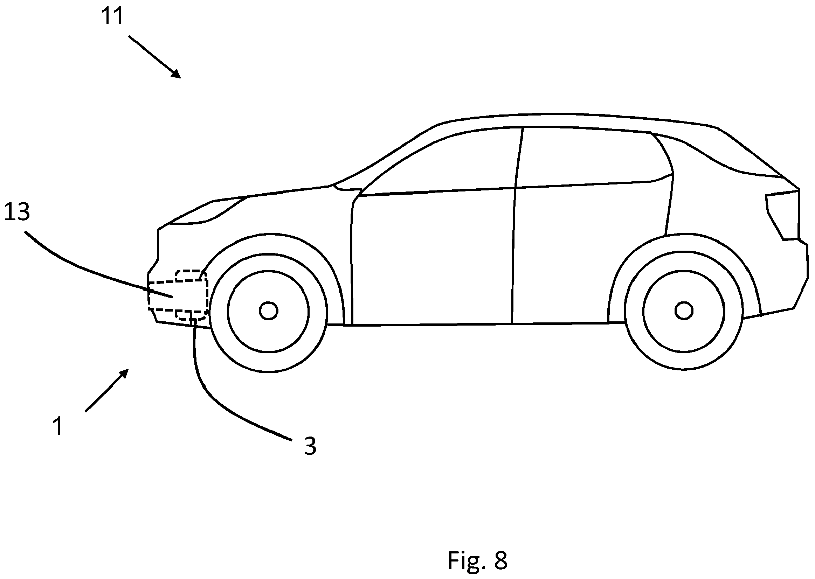

Figure 8 schematically shows the vehicle 11 comprising a cooling system 1 according to the disclosure.

Although the disclosure has been illustrated and described in detail in the drawings and foregoing description, such illustration and description are to be considered illustrative or exemplary and the disclosure is not limited to the disclosed example embodiments.

### References:

- 1.: Cooling system
- 2.: Cooling system radiator
- 3.: On-board charger
a. Internal cooling ducts
- 4.: Vehicle component
a. Combined inverter and DC/DC converter
b. Electric motor
- 5.: Cooling fluid pump
- 6.: Housing
- 7.: Housing lid
- 8.: Connections
- 9.: Heat exchanging arrangement
- 10.: Front side
- 11.: Vehicle
- 12.: Grill
- 13.: Air channel
- 14.: Main radiator
- 15.: Lower engine under shield

## Claims

1. Cooling system (1) for an electric vehicle (11), wherein the cooling system (1) comprises an on-board charger (3) in cooling fluid connection with a cooling fluid pump (5), a cooling system radiator (2) and at least one vehicle component (4), **characterized in that** the on-board charger (3) comprises a heat exchanging arrangement (9) arranged on a housing (6) of the on-board charger (3), wherein, when an airflow generated from the vehicle (11) moving flows over the heat exchanging arrangement (9), the heat exchanging arrangement (9) is arranged to cool a cooling fluid pumped through the on-board charger (3) by means of heat exchange between the cooling fluid and the airflow, thereby increasing the cooling of the vehicle component (4).

2. Cooling system (1) according to claim 1, wherein the on-board charger (3) is arranged in connection to an air channel (13) and the airflow is a ram airflow generated in the air channel (13) from the vehicle (11) moving, wherein the ram airflow is directed to flow over the heat exchanging arrangement (9) via openings in the air channel (13), and/or wherein at least a part of the heat exchanging arrangement (9) extends into the ram airflow in the air channel (13) such that the ram air flow flows over the heat exchanging arrangement (9).

3. Cooling system (1) according to claim 1 or 2, wherein the heat exchanging arrangement (9) is arranged on a housing lid (7) of the on-board charger (3).

4. Cooling system (1) according to any one of the preceding claims, wherein the heat exchanging arrangement (9) comprises a cooling flange or cooling fins.

5. Cooling system (1) according to any one of the preceding claims 2-4, wherein the on-board charger (3) is arranged essentially parallel to a grill (12) of the vehicle (11) and the air channel (13) is an air channel (13) arranged to create an air curtain over a front tire.

6. Cooling system (1) according to any one of the preceding claims 2-4, wherein the on-board charger (3) is arranged adjacent a main radiator (14) and the air channel (13) is an air channel (13) arranged to direct air over the main radiator (14).

7. Cooling system (1) according to any one of the preceding claims 2-4, wherein the on-board charger (3) is arranged under a lower engine under shield (15) of the vehicle (11) and the air channel (13) is an air channel (13) in the lower engine under shield (15).

8. Cooling system (1) according to any one of the preceding claims, wherein the on-board charger (3) is arranged between the vehicle component (4) and the cooling system radiator (2) in the cooling system (1).

9. Cooling system (1) according to any one of the preceding claims, wherein the heat exchanging arrangement (9) is a passive heat exchanging arrangement (9).

10. Cooling system (1) according to any one of the preceding claims, wherein the heat exchanging arrangement (9) is an active heat exchanging arrangement (9), wherein the cooling flange or cooling fins is arranged to also be provided with a coolant medium.

11. Vehicle (11) comprising a cooling system (1) according to the preceding claims.

12. Method for increased cooling power of a vehicle component (4), wherein a cooling system (1) comprises an on-board charger (3) in cooling fluid connection with a cooling fluid pump (5), a cooling system radiator (2) and the vehicle component (4), wherein the method comprises:
- providing the on-board charger (3) with a heat exchanging arrangement (9) arranged on a housing (6) of the on-board charger (3),
- generating an airflow from the vehicle (11) moving arranged to flow over the heat exchanging arrangement (9),
- cooling a cooling fluid passing through the on-board charger (3) by means of heat exchange between the cooling fluid and the airflow flowing over the heat exchanging arrangement (9).

13. Method according to claim 12, wherein the method comprises:
- arranging the on-board charger (3) in connection to an air channel (13),
- generating a ram airflow in the air channel (13) from the vehicle (11) moving,
- directing the ram airflow to flow over the heat exchanging arrangement (9) via openings in the air channel (13), and/or
- arranging at least a part of the heat exchanging arrangement (9) to extend into the ram airflow in the air channel (13) such that the ram air flow flows over the heat exchanging arrangement (9).

14. Method according to any one of claims 12-13, wherein the method comprises:
- arranging the heat exchanging arrangement (9) on a housing lid (7) of the on-board charger (3).

15. Method according to any one of claims 12-14, wherein the method comprises:
- arranging a cooling flange or cooling fins as the heat exchanging arrangement (9).
